## Europäisches Patentamt
## European Patent Office
## Office européen des brevets

(19)

(11) Veröffentlichungsnummer: **0 154 311**
**A2**

(12) # EUROPÄISCHE PATENTANMELDUNG

(21) Anmeldenummer: 85102324.2

(22) Anmeldetag: 01.03.85

(51) Int. Cl.⁴: **B 27 B 25/00**
**B 27 B 27/02**

(30) Priorität: 05.03.84 DE 3408022

(43) Veröffentlichungstag der Anmeldung:
11.09.85 Patentblatt 85/37

(84) Benannte Vertragsstaaten:
AT BE CH FR GB IT LI NL SE

(71) Anmelder: Keusch, Siegfried, Dipl.-Ing.
Mozartstrasse 41
D-7310 Plochingen(DE)

(72) Erfinder: Keusch, Siegfried, Dipl.-Ing.
Mozartstrasse 41
D-7310 Plochingen(DE)

(74) Vertreter: Cast, Adolf, Dipl.-Ing.
Schmaltalstrasse 13
D-7318 Lenningen 1(DE)

(54) **Holzbearbeitungsmaschine mit Parallelanschlag.**

(57) Bei einer Holzbearbeitungsmaschine (1) ist an einem Haltearm (8) des Parallelanschlags anstelle der serienmäßigen Anschlagleiste eine Vorschubvorrichtung (13) mit einer damit verbundenen Anschlagfläche (17) anbringbar. Damit ist es auch einem Nichtfachmann möglich, die Vorschubvorrichtung (13) mit Anschlagfläche (17) rasch und ohne Hilfswerkzeuge an der Holzbearbeitungsmaschine (1) anzubringen und wieder abzunehmen und es ergibt sich somit eine Verbilligung und Verringerung der Rüstzeiten.

Durch die Verwendung eines Elektro-Magneten (20) am freien Ende der Vorschubvorrichtung (13) wird diese während der Förderung vom Werkstück (5) sicher am Auflagetisch (2) festgehalten.

./...

Croydon Printing Company Ltd

Fig. 1

0154311

Dipl.Ing. Siegfried Keusch, 7310 Plochingen

## Holzbearbeitungsmaschine mit Parallelanschlag

Die Erfindung bezieht sich auf eine Holzbearbeitungsmaschine mit Parallelanschlag gemäß Oberbegriff von Anspruch 1.

Zur Ausführung von Längsschnitten bei Werkstücken aus
Holz oder holzähnlichen Werkstoffen auf einer Holzbearbeitungsmaschine, z.B. einer Tischkreissäge, einer Bandsäge usw. ist
es bekannt, das Werkstück an einem aus einem Haltearm und einer
Anschlagleiste bestehenden Parallelanschlag entlangzuführen.

Zur Förderung des Werkstücks kann dazu ein handelsüblicher
Vorschubapparat vorgesehen sein, der am Auflagetisch der
Holzbearbeitungsmaschine angeschraubt ist.

Nachteilig bei dieser Anordnung ist der erhebliche Aufwand,
der beim Anbau der Vorschubvorrichtung durch einen Fachmann
unter Zuhilfenahme von Hilfswerkzeugen am Auflagetisch nötig
ist. Bei bestimmten Arbeitsgängen ist es außerdem nötig, die
Vorschubvorrichtung wieder abzubauen, was wiederum einen erheblichen Zeitaufwand erfordert.

Aufgabe der vorliegenden Erfindung ist daher die Schaffung
einer Holzbearbeitungsmaschine mit Parallelanschlag der
eingangs genannten Art, bei der die Vorschubvorrichtung
rasch und ohne Benützung von Hilfswerkzeugen auch von einem
Nichtfachmann an der Holzbearbeitungsmaschine angebracht
und wieder abgenommen werden kann.

Diese Aufgabe wird erfindungsgemäß durch das im kennzeichnenden Teil des Anspruchs 1 angegebene Merkmal gelöst.

Wird somit bei einer serienmäßigen Holzbearbeitungsmaschine, also z.B. einer Tischkreissäge, die mit dem handelsüblichen Haltearm verbundene Anschlagleiste entfernt, dann lässt sich die erfindungsgemäße Vorschubvorrichtung, die bereits mit der Anschlagfläche versehen ist, leicht am Haltearm anklemmen. Es sind dazu keine Hilfswerkzeuge notwendig und auch jeder Nichtfachmann ist in der Lage, die Vorschubvorrichtung anzubringen und wieder abzunehmen. Der mit dem der Vorschubvorrichtung verbundene Halteschlitz dient dabei zur Aufnahme der mit dem Haltearm verbundenen Klemmleiste.

Gegenüber der herkömmlichen Anordnung einer getrennten Vorschubvorrichtung mit davon getrennter Anschlagleiste ergibt sich eine Verbilligung, ein geringeres Gewicht und die Möglichkeit, die Anschlagfläche leichter und rascher auf die gewünschte Position einzustellen.

Die erfindungsgemäße Vorschubvorrichtung ist damit auch universeller für die verschiedensten Arbeitsgänge bei Holzbearbeitungsmaschinen verwendbar.

In den Unteransprüchen sind vorteilhafte Weiterbildungen der Erfindung gekennzeichnet. So ergibt die Verwendung eines Festhalteorgans, insbesondere in Form eines Elektromagnets die Möglichkeit, die Vorschubvorrichtung rasch und sicher mit dem Auflagetisch zu verriegeln. Anstelle des Elektromagnets ist jedoch auch die Verwendung eines Permanentmagneten möglich.

Wird der Elektromagnet so geschaltet, daß er mit dem Elektromotor zum Antrieb der Vorschubvorrichtung ein- und ausschaltbar ist, so erfolgt die Verriegelung nur während des Fördervorgangs, wohingegen es während des Stillstands der Fördervorrichtung möglich ist, die Vorschubvorrichtung in die gewünschte Arbeitsposition zu verschieben.

Das Festhalteorgan hat in erster Linie die Aufgabe, ein Abheben der Vorschubvorrichtung vom Auflagetisch zu verhindern, da ja die Vorschubrollen der Vorschubvorrichtung einen Anpressdruck auf das Werkstück ausüben, dessen Reaktionskraft bestrebt ist, die Vorschubvorrichtung von der Auflagefläche abzuheben.

Zum leichten Verschieben der Vorschubvorrichtung in ihre Arbeitsposition ist eine Stützrolle vorgesehen, die die gegen den Auflagetisch gerichtete Aufsitzfläche der Vorschubvorrichtung um einen geringen Betrag überragt. Da diese Stützrolle federnd in Richtung Auflagetisch gelagert ist, hebt sie die Vorschubvorrichtung bei Ausschalten des Elektromagneten geringfügig vom Auflagetisch ab und ermöglicht es, die Vorschubvorrichtung in die gewünschte Lage zu verschieben. Andererseits zieht der erregte Elektromagnet die Vorschubvorrichtung fest gegen die Auflagefläche, wobei die Reibung zwischen den aneinanderliegenden Flächen ein Verschieben der Vorschubvorrichtung sicher verhindert. Dabei wird die Stützrolle gegen Wirkung der Druckfeder nach innen verschoben.

Ein ebenfalls am Ende der Vorschubvorrichtung angeordneter Sicherheitsschalter unterbricht den Stromkreis des Antriebsmotors, wenn der Elektromagnet nicht haftet. Er bewirkt damit einen sofortigen Stillstand der Vorschubvorrichtung und verhindert eine weitere Förderung des Werkstücks in Richtung Sägeblatt, so daß Unfälle durch herausgeschleuderte Werkstücke sicher verhindert werden.

Weitere vorteilhafte Merkmale ergeben sich aus den weiteren Unteransprüchen.

**0154311**

Im folgenden sind Ausführungsbeispiele der Erfindung
unter Bezugnahme auf die Zeichnungen näher beschrieben.

Es zeigen:

Fig. 1    Holzbearbeitungsmaschine mit Vorschubvorrichtung
          von oben.

Fig. 2    Teilansicht der Holzbearbeitungsmaschine mit
          Vorschubvorrichtung von der Eingabeseite.

Fig. 3    Teilschnitt nach Linie III-III in Fig. 1.

Fig. 4    Holzbearbeitungsmaschine mit einem zweiten
          Ausführungsbeispiel der Erfindung, von oben.

Fig. 5    Teilschnit nach Linie V-V in Fig. 4.


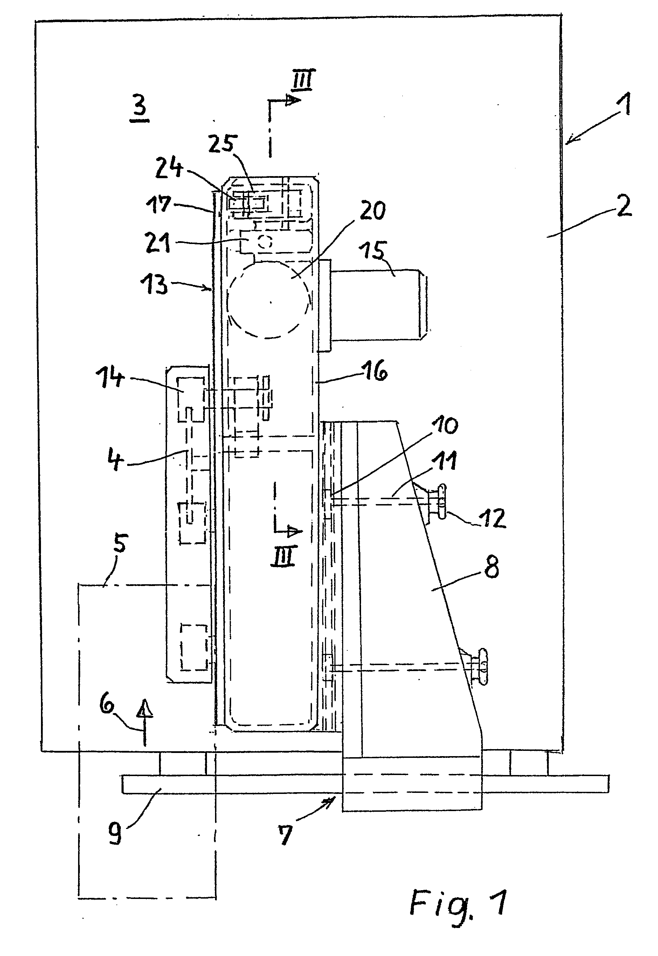

Die in Fig. 1 gezeigte Tischkreissäge 1 ist mit einem Auflagetisch 2 mit Auflagefläche 3 und einem antreibbaren
Kreissägeblatt 4 versehen.Zur Führung von Werkstück 5 in
Arbeitsrichtung nach Pfeil 6 dient ein Parallelanschlag 7,
der einen Haltearm 8 aufweist. Dieser ist an einer Führungsstange 9 von kreisförmigem oder rechteckigem Querschnitt an
einer Seite von Auflagetisch 2 senkrecht zur Arbeitsr_ichtung 6
verschiebbar gelagert.

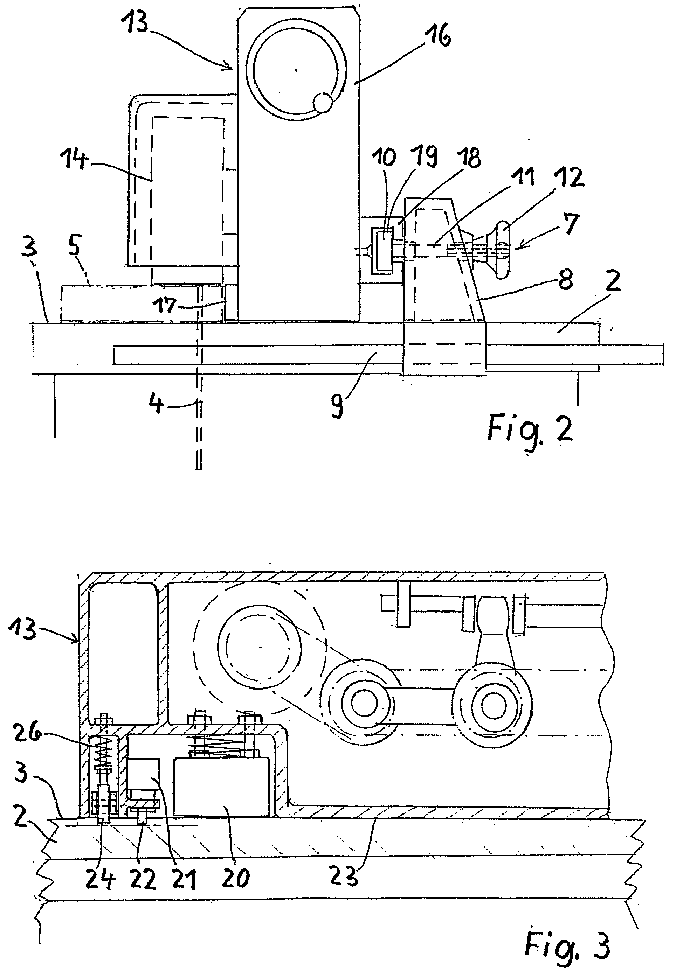

Wie auch Fig. 2 zeigt, ist er mit einer Klemmleiste 10 versehen, die mit zwei Schraubbolzen 11 mit dem Haltearm 8
verbunden ist. Die Klemmleiste 10 kann mittels Schraubgriffen 12 in Achsrichtung der Schraubbolzen 11 verschoben
werden.

Zur maschinellen Förderung von Werkstück 5 durch das Kreissägeblatt 4 dient in an sich bekannter Weise eine Vorschub-

vorrichtung 13, deren schwenkbare Vorschubrollen 14 von
einem Elektromotor 15 über eine nicht dargestellte Kette
antreibbar sind. Diese Vorschubrollen 14 mit Antrieb sind
an einem Gehäuse 16 von kastenförmigem Querschnitt gelagert,
das entlang seiner Unterkante mit einer Anschlagfläche 17
zur Führung des Werkstücks 5 versehen ist. (Fig. 2)

An der den Vorschubrollen gegenüberliegenden Seite ist mit
dem Gehäuse 16 ein C-Profil 18 verbunden, das einen Halteschlitz 19 aufweist. In diesen Halteschlitz 19 greift die
Klemmleiste 10 von Haltearm 8 ein und beim Anziehen der
Schraubgriffe 12 wird die Vorschubvorrichtung 13 sicher am
Haltearm 8 angeklemmt. Andererseits ist es nach Lösen der
Schraubgriffe 12,möglich, die Vorschubvorrichtung in Richtung von Pfeil 6 so zu verschieben, daß sie zum Sägeblatt 4
die günstigste Lage einnimmt.

Wie auch Fig. 3 zeigt, ist die Vorschubvorrichtung 13 an
ihrem freien Ende mit einem gegen die Auflagefläche 3
gerichteten Elektromagneten 20 versehen, der im eingeschalteten Zustand die Vorschubvorrichtung 13 am Auflagetisch 2
aus Stahl oder Grauguß festpresst. Der Elektromagnet 20 ist
dabei so mit der Stromzuführung verbunden, daß er zusammen
mit dem Elektromotor 15 zum Antrieb der Vorschubvorrichtung 13
ein- und ausschaltbar ist.

Am freien Ende der Vorschubvorrichtung 13 ist außerdem ein
Sicherheitsschalter 21 angeordnet, dessen Taststift 22 die
nach unten gerichtete Aufsitzfläche 23 der Vorschubvorrichtung 13 überragt. In dieser Stellung unterbricht der
Sicherheitsschalter 21 den Stromkreis zum Elektromotor 15
zum Antrieb der Vorschubvorrichtung 13. Dieser Elektromotor 15
ist somit erst einschaltbar, wenn der Elektromagnet 20 sicher
an der Auflagefläche 3 haftet.

Am Ende der Vorschubvorrichtung 13 ist ferner eine Stützrolle 24 angeordnet, die in einer Schwinge 25 frei drehbar

6

gelagert ist und durch eine Feder 26 in Richtung Auflagefläche 3 beaufschlagt ist. Sie überragt ebenfalls die
Aufsitzfläche 23 der Vorschubvorrichtung 13 um einen geringen Betrag und ermöglicht eine leichte Verschiebung
der Vorschubvorrichtung 13 senkrecht zur Arbeitsrichtung
nach Abschalten des Elektromagneten 20.

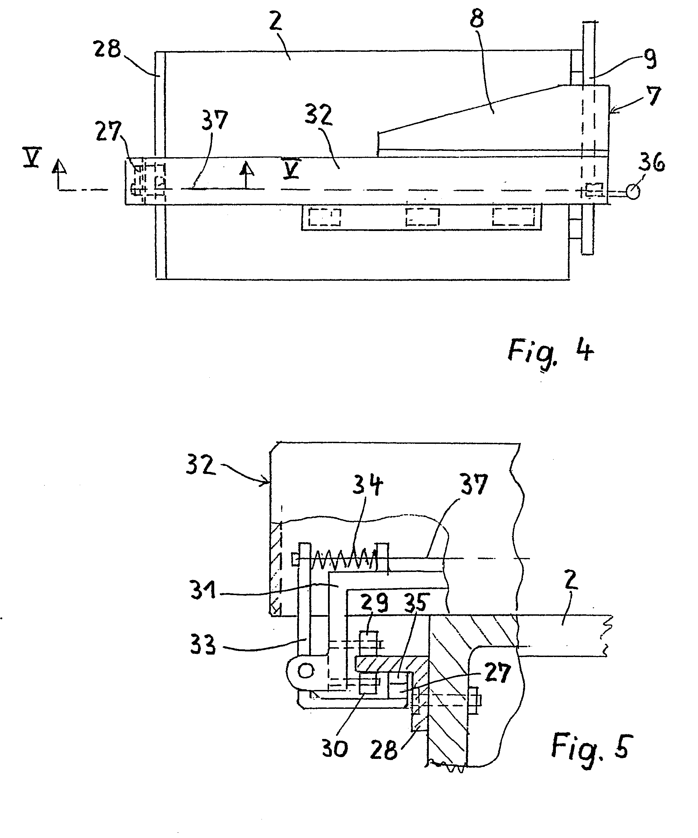

Die Fig. 4 und 5 zeigen ein weiteres Ausführungsbeispiel
der Erfindung, bei dem das Festhalteorgan als Klemmelement 27
ausgebildet ist. Dazu ist der Auflagetisch 2 an der der
Führungsstange 9 gegenüberliegenden Seite mit einem Führungswinkel 28 versehen, an dem sich die beiden Stützrollen 29
und 30 abstützen. Diese Stützrollen 29 und 30 sind an einer
Lasche 31 frei drehbar gelagert, die mit dem freien Ende
der Vorschubvorrichtung 32 verbunden ist. An Lasche 31 ist
ein Winkelhebel 33 schwenkbar gelagert und mit einem Klemmkissen 35 versehen, das in Klemmstellung unter Wirkung von
Feder 34 mit dem Führungswinkel 28 so zusammenwirkt, daß es
die Vorschubvorrichtung 32 mit dem Auflagetisch 2 fest verriegelt. Zum Lösen der Klemmung dient ein handbetätigter
Klemmhebel 36, mit dem der Winkelhebel 33 über einen Drahtzug 37 in seine Freigabestellung schwenkbar ist. Nach Lösen
von Klemmkissen 35 lässt sich die Vorschubvorrichtung 32
mittels der Stützrolle 29 leicht in die gewünschte Arbeitsposition verschieben. Die Stützrolle 30 verhindert wieder
ein Abheben der Vorschubvorrichtung 32 beim Fördern der
Werkstücke.

Patentansprüche

1) Holzbearbeitungsmaschine mit Parallelanschlag, dessen Haltearm an einer mit dem Auflagetisch verbundenen Führungsstange senkrecht zur Arbeitsrichtung verschiebbar gelagert ist, d a d u r c h g e k e n n - z e i c h n e t , daß eine Vorschubvorrichtung (13,32) und eine damit verbundene Anschlagfläche (17) für das Werkstück (5) mittels eines Haltearms (8) verschiebbar am Auflagetisch (2) gelagert ist.

2) Holzbearbeitungsmaschine nach Anspruch 1, d a d u r c h g e k e n n z e i c h n e t , daß die Vorschubvorrichtung (13,32 ) anstelle der serienmäßigen Anschlagleiste am Haltearm (8) zum raschen und einfachen Anbringen und Abnehmen befestigbar ist.

3) Holzbearbeitungsmaschine nach Anspruch 2, d a d u r c h g e k e n n z e i c h n e t , daß die Vorschubvorrichtung (13,32) einen Halteschlitz (19) aufweist, in den die Klemmleiste (10) eines auf der Holzbearbeitungsmaschine (1) serienmäßig vorhandenen Haltearms (8) einführbar und somit die Vorschubvorrichtung (13,32) am Haltearm (8) festklemmbar ist.

4) Holzbearbeitungsmaschine nach einem der Ansprüche 1 bis 3 mit einem um seine Verschiebeachse schwenkbaren Haltearm, d a d u r c h g e k e n n z e i c h n e t , daß am freien Ende der Vorschubvorrichtung (13,32) ein Festhalteorgan (20,35) vorgesehen ist, mit dem die Vorschubvorrichtung (13,32) am Auflagetisch (2) festhaltbar ist.

0154311

5) Holzbearbeitungsmaschine nach Anspruch 4, d a d u r c h
g e k e n n z e i c h n e t , daß als Festhalteorgan
ein Magnet (20) vorgesehen ist, der zum Festhalten der
Vorschubvorrichtung (13) mit dem Auflagetisch (2) zusammenwirkt.

6) Holzbearbeitungsmaschine nach Anspruch 5, d a d u r c h
g e k e n n z e i c h n e t , daß der Magnet als Elektro-
Magnet (20) ausgebildet ist.

7) Holzbearbeitungsmaschine nach Anspruch 6, d a d u r c h
g e k e n n z e i c h n e t , daß der Elektromagnet (20)
zusammen mit dem Elektromotor (15) zum Antrieb der Vorschubvorrichtung (13) ein- und ausschaltbar ist.

8) Holzbearbeitungsmaschine nach Anspruch 7, d a d u r c h
g e k e n n z e i c h n e t , daß am freien Ende der
Vorschubvorrichtung (13) ein mit dem Auflagetisch (2)
zusammenwirkender Sicherheitsschalter (21) angeordnet
ist, der den Stromkreis zum Antriebsmotor (15) unterbricht, wenn der Elektromagnet (20) nicht an der Auflagefläche (3) des Auflagetisches (2) haftet.

9) Holzbearbeitungsmaschine nach Anspruch 4, d a d u r c h
g e k e n n z e i c h n e t , daß als Festhalteorgan
ein von Hand betätigbares Klemmelement (35) vorgesehen
ist, mit dem die Vorschubvorrichtung (32) am Auflagetisch (2) anklemmbar ist.

10) Holzbearbeitungsmaschine nach einem der Ansprüche 1 bis 9,
d a d u r c h g e k e n n z e i c h n e t , daß am
freien Ende der Vorschubvorrichtung (13,32) mindestens
eine mit dem Auflagetisch zusammenwirkende Stützrolle (24,29)
frei drehbar gelagert ist.

0154311

11) Holzbearbeitungsmaschine nach einem der Ansprüche 5 bis 8 und 10, d a d u r c h  g e k e n n z e i c h n e t , daß die Stützrolle (24) an der Vorschubvorrichtung (13) in Stützrichtung federnd gelagert ist und die gegen den Auflagetisch (2) gerichtete Aufsitzfläche (23) der Vorschubvorrichtung (13) überragt.

12) Holzbearbeitungsmaschine nach einem der Ansprüche 1 bis 11, d a d u r c h  g e k e n n z e i c h n e t , daß die Vorschubvorrichtung (13,32) und die Anschlagfläche (17) in einem gemeinsamen Gehäuse (16) angeordnet sind.

Fig. 1

0154311

Fig. 2

Fig. 3

Fig. 4

Fig. 5